# EUROPEAN PATENT APPLICATION

(11) **EP 0 530 902 A1**
(43) Date of publication of application: **10.03.1993**
(21) Application number: 92202604.2
(22) Date of filing: 27.08.1992
(51) Int. Cl.: C04B 28/00, C04B 40/02, C04B 38/00, C08J 9/36

(54) **Method for manufacturing an insulating element and element thus manufactured**

(30) Priority: 04.09.1991 BE 9100822
(71) Applicant: ISOMO, naamloze vennotschap, B-8501 Heule (BE)
(72) Inventor: Vereecke, Paul, B-8501 Heule (BE)
(74) Representative: Donné, Eddy

(57) **Abstract**

Method for manufacturing an insulating element, according to which a liquid or weak matrix on the basis of at least one silicate is allowed to harden and before the matrix is completely hardened gas bubbles are introduced into it or form in it, characterised in that the matrix on the basis of aluminosilicate mixed with at least one alkali metal hydroxide and/or alkali metal silicate is formed in aqueous medium and the matrix is allowed to harden through reaction of the aluminosilicate with the alkali metal hydroxide and/or the alkali metal silicate, whereby at least in the beginning of the reaction until a stiff mass is obtained, the dehydration is hindered and a pressure is exerted on the outside of the matrix, and before this stiff mass is obtained, the gas bubbles are introduced into the matrix and/or form in situ.

## Description

The invention relates to a method for manufacturing an insulating element, according to which a weak or liquid matrix on the basis of at least one silicate is allowed to harden and before the matrix is completely hardened gas bubbles are introduced into it and/or form in it.

A method of this type is known from GB-A-1.321.093. In this a matrix is manufactured with among others sodium silicate as binding agent, a ceramic filler such as fly ash and an amphoteric metal powder such as aluminium powder which reacts with a part of the sodium silicate in order to form foam in situ. This matrix is poured into a form and heated at atmospheric pressure at more than 80 degrees in order to harden. During the hardening a dehydration takes place. Because of that the reaction which takes place in the matrix is reversible and the resistance to atmospheric action of the end product is limited.

A similar method is also known from GB-A-1.031.138. According to this method a matrix is manufactured from sodium or potassium silicates in aqueous medium to which expandable but not yet expanded synthetic particles are added. After partial hardening of the matrix the particles are allowed to expand through heating and the whole to harden further. This material is also not resistant to atmospheric action.

The invention is intended to remedy this disadvantage and to provide a method for manufacturing an insulating element which is relatively simple and inexpensive and permits the manufacture of an insulating element with excellent insulating and mechanical properties which is to a large extent fire-resistant and is furthermore resistant to atmospheric action.

For this purpose the matrix on the basis of aluminosilicate mixed with at least one alkali metal hydroxide and/or alkali metal silicate is formed in aqueous medium and the matrix is allowed to harden through reaction of the aluminosilicate with the alkali metal hydroxide and/or the alkali metal silicate, whereby at least in the beginning of the reaction until a stiff mass is obtained, the dehydration is hindered and a pressure is exerted on the outside of the matrix, and before this stiff mass is obtained, the gas bubbles are introduced into the matrix and/or form in situ.

By hindering the dehydration a real chemical reaction takes place and a so-called polymer is obtained. Through hardening under an increased pressure particularly good mechanical properties are obtained. The amount of binding agent can be minimal. Especially with the use of pre-expanded synthetic particles which are introduced into the matrix this increased pressure offers particular advantages. Because of that the openings between the particles are completely filled with binding agent and the particles themselves are slightly transformed so that a solid honeycomb structure is obtained.

If removal by suction of the gas phase is not employed, this means that the aforementioned reaction is allowed, at least until a stiff mass is obtained, to take place under an overpressure in relation to the atmospheric pressure.

The aforementioned increased pressure corresponds to an overpressure which preferably lies between 0.20 and 1.00 bar, but an overpressure between 0.20 and 0.30 bar is usually sufficient.

In a particular embodiment of the invention the reaction is allowed, at least until a stiff mass is obtained, to take place in a mould in order to resist dehydration.

The mould can be a closed mould but can also be formed by two water impermeable walls or coverings between which the matrix is installed.

In a notable embodiment of the invention the aluminosilicate is allowed to react with the alkali metal hydroxide and/or silicate after shaping. In this embodiment an element is obtained which is already in the desired form. For this purpose the matrix in liquid or weak state can be poured into a form which can form the aforementioned mould.

In a suitable embodiment of the invention the element is provided with a skin on at least one side.

The gas bubbles can be introduced into the matrix by physical means or by the addition of elastic expanded granules with closed cells which enclose gas.

In these cases the pressure is exerted on the outside of the matrix at least for a part by means of a press.

This press can at the same time form the aforementioned mould of which for example a wall is moveable. With continuous manufacture the pressure can be exerted by a calender.

The gas bubbles can also be introduced into the matrix by the addition of not yet completely expanded elastic granules with closed cells, which are allowed to expand in the matrix before the stiff mass is obtained.

In this case the reaction can, at least until a stiff mass is obtained, take place in an almost closed stiff mould and the pressure on the outside of the matrix can at least for a part be caused through the expansion of the granules.

Finally the gas bubbles can be formed in the matrix itself by the addition of a gas producing or foam forming substance.

If moreover the reaction is allowed, at least until a stiff mass is obtained, to take place in an almost closed stiff mould the pressure on the outside of the matrix can at least for a part be caused through the formation of gas or formation of foam in the matrix itself.

Additional substances can be added to the matrix such as agents in order to alter the viscosity, or mineral fibres or organic polymer fibres for strengthening.

In an extreme case, when the gas bubbles are introduced in the form of expanded synthetic material, this synthetic material can instead of in the form of loose particles, be introduced in the form of a premanufactured element of foam plastic, in which case a skin of the matrix is applied on this element.

The invention thus also relates to a method for manufacturing an insulating element, of which the characteristic consists in that a skin of a liquid or weak matrix on the basis of aluminosilicate mixed with at least one alkali metal hydroxide and/or alkali metal silicate in aqueous medium is applied to at least a part of a surface of an element of insulating foam plastic and is allowed to react, whereby the dehydration is hindered at least until partial hardening.

The invention also relates to an insulating element manufactured with the method according to any of the aforementioned embodiments.

In order to show better the characteristics according to the present invention, some preferred embodiments of a method for manufacturing an insulating element and element thus manufactured according to the invention, are described hereafter, as examples and without any restrictive character.

For the manufacture of a plate with thermal insulating properties and a notable fire-resistance according to the invention a weak matrix is manufactured on the basis of an aluminosilicate which is allowed to react in an aqueous alkaline medium with at least one alkali metal hydroxide or at least one alkali metal silicate or a mixture of two or more of these substances.

A suitable matrix has a composition as described in US-A-3.119.659 and US-A-3.119.660.

With the use of a matrix of aluminosilicate and sodium silicate the molar ratios are:

| | |
|---|---|
| Na₂O/SiO₂ | 0.5 - 7 |
| SiO₂/Al₂O₃ | 1.5 - 7 |
| H₂O/Na₂O | 10 - 60 |

The sodium can be entirely or partly replaced by other alkali metals such as potassium or lithium.

The matrix is put into a stiff mould which during the reaction, at least until it is sufficiently far formed in order to acquire a stiff mass which can be removed from the mould, is held shut, among others in order to hinder dehydration. Through dehydration the desired properties of the end material would not be obtained.

Before the polymerisation is finished and preferably even prior to the start thereof, gas bubbles are provided in the matrix. These gas bubbles can either be made in situ by the addition of gas forming materials such as aluminium powder, or foaming agents with a foam stabiliser or a combination of gas forming materials and foaming agents to the components of the matrix, or be introduced into the matrix from outside for example by the addition of expanded or expandable synthetic granules which in expanded state are elastically transformable and contain closed cells with gas, or by a combination of both aforementioned techniques. The aforementioned granules can be completely expanded beforehand, but the granules can also be added before they are completely expanded so that the expansion takes place entirely or partly in the matrix.

Suitable granules are polystyrene granules which prior to being introduced have been covered with a substance in order to make them hydrophillic. The hardening, this is the polymerisation, can be accelerated by heating the mould up to a temperature of between 30 and 120 degrees Celsius. This heating can be produced by means of electric resistances, microwaves, high frequency heating or infrared radiation.

It is important that the hardening and polymerisation, at least until the aforementioned stiff mass is obtained, takes place under exertion of an overpressure on the outside of the matrix. In sofar removal by suction of the gas phase from the matrix is not employed, this signifies that the aforementioned hardening and polymerisation takes place in the mould with an overpressure in relation to the atmospheric pressure, preferably with an overpressure of 0.2 to 1 and for example of 0.2 to 0.3 bar. This overpressure can be both of internal and external origin. In the first case the mould is closed after filling and the pressure develops through the formation of gas or foam or through the expansion or further expansion of the expandable synthetic granules. In the second case a mould with a movable wall is used which after filling presses with a pressure on the mixture in the mould. With the manufacture of a plate, the thickness of the plate is thus reduced.

After the polymerisation the surplus water evaporates. Removal from the mould can take place after the polymerisation or in most cases already earlier, after sufficient hardening or in other words after the aforementioned stiff mass has been obtained, this is 1 minute up to several hours after the start of the reaction, depending on the temperature and the matrix materials.

Before this stiff mass is obtained, fillers or additional substances, such as fibres for example, can be added to the matrix for example in order to alter the viscosity of the matrix.

In order to influence favourably the mechanical properties of the plate, a mat of fibres, for example of polypropylene or glass, can be provided on one or on both sides of the matrix, which mat is also saturated by the viscous matrix. Such a mat, possibly already moistened with the material of the matrix, is for example placed on the bottom of the mould after which the matrix is poured thereon and possibly thereafter a second mat, possibly also moistened with the material of the matrix, is applied thereon prior to closing the mould.

Instead of covering the matrix with a mat, a skin of the same material as the matrix but without gas bubbles can also be formed on one or on both sides. This matrix material can be poured or sprayed on to a side of the already hardened matrix.

Obviously skins other than fibres saturated with matrix material or pure matrix material can also be applied and after hardening the skins can also be attached to the toughened matrix by other materials than matrix material, such as glues.

In a variant of the method described above an ordinary mould is not used discontinuously but the operation is continuous whereby the matrix is installed on an endless band and the necessary pressure during the polymerisation is ensured with the assistance of calenders.

In yet another variant of the method according to the invention the gas bubbles are introduced into the material not by mixing them as separate particles with the viscous matrix but by applying a skin of the viscous matrix on to an already pre-manufactured element of foam plastic. Obviously the matrix must not contain any gas or foam forming agents. The viscous matrix can for example be applied to one or both sides of a plate of expanded polystyrene.

The hardened or polymerised matrix forms a hard, stony or ceramic-like mass with a composition which is close to a zeolitic or feldspathoid composition. Because of the gas bubbles the hardened product has good insulating properties. The fire-resistance of the hardened matrix whether or not with gas bubbles, is excellent.

The invention will be further clarified on the basis of a few practical examples.

### Example 1.

15.2 kg of powdery anhydrous aluminosilicate Al₂O₃.2 SiO₂ is mixed with 3 kg of grog with fine granulometry and 18 kg of sodium silicate dissolved in water with a molar ratio SiO₂/Na₂O = 1.68 and H₂O/Na₂O = 10.2 in a planetary mixer until an homogeneous suspension is obtained.

To the thus obtained liquid matrix 6.15 kg of expanded polystyrene granules are added of which the surface has been covered with a hydrophillic substance and is mixed until the matrix forms a film which covers the granules.

Subsequently the mixture obtained is spread out in a rectangular metal mould of which the top and bottom plate the size of 2 m x 1 m can be heated with electric resistances. The top plate is pressed on to the mould so that an overpressure of 1 bar is obtained in the mould and the thickness of the layer of mixture in the mould reduces namely to 54 mm. The top and bottom plates are now heated to 60 degrees Celsius for 4 hours.

In this period the matrix polymerises and hardens. After removal from the mould and evaporation of the surplus water a plate of 2 m x 1 m x 54 mm is obtained with a density of 350 kg/m³, with an elastic modulus of 200 MPa, a bending resistance of 0.75 MPa and a pressure resistance of 1 MPa.

### Example 2.

An amount of the matrix material from example 1 is prepared but instead of mixing this with polystyrene granules and putting it in a mould this material is sprayed with a spray gun of the type which is utilised with the production of fibreglass reinforced cement in a 2 to 3 mm thick layer, which is strengthened with 6 vol. % fibreglass bundles (roving) of approximately 25 mm length cut by the gun, on two supple plastic films of 2 m x 1 m.

Between the two thus formed skins, with the plastic film turned outwards, a mixture of matrix material and polystyrene granules prepared according to example 1 is applied.

The whole is put into the mould utilised in example 1 but the top plate is pressed down only so much that the thickness of the matrix is brought to 59 mm. After heating the top and bottom plate of the mould up to 60 degrees Celsius for 4 hours the matrix material is polymerised both with the skins and with the core in one operation. After removal from the mould, the removal of the plastic films and evaporation of the surplus water a sandwich plate is obtained with a density per surface area unit of 29.5 kg/m². When subjected to bending stress the plate resists a bending moment of 1.75 kNm/m.

This plate is placed in the side wall of an oven which after 5 minutes reaches a temperature of 500 degrees Celsius, after 20 minutes 850 degrees Celsius and as from 30 minutes a constant temperature of 900 degrees Celsius. The test is stopped after 70 minutes. The plate is still completely intact and no smoke has formed on the outside yet. On the outside of the plate the temperature rose to 8 degrees Celsius above room temperature after 20 minutes, to 35 degrees Celsius above room temperature after 40 minutes and to 92 degrees Celsius above room temperature after 60 minutes.

### Example 3.

2.45 kg of fly ash originating from a coal-fired electricity power station is mixed with a solution of potassium silicate in water with a molar ratio SiO₂/K₂O = 0.63 and H₂O/K₂O = 30 in a planetary mixer. The mixture obtained is spread out on one side of a core of expanded polystyrene foam with a thickness of 120 mm and a density of 25 kg/m³. A polypropylene film is applied to this layer of matrix material and with a calender this film is completely pressed into this layer which because of this gets a thickness of 2 mm. Thereafter the layer is covered with a plastic foil. The whole is turned round and the other side is covered in the same manner with a matrix material into which a polypropylene film is pressed and a plastic foil.

The whole obtained is placed in a stiff mould heated to 80 degrees Celsius and while this mould is pressed close with a light pressure, the hardening takes place. After 30 minutes the whole is removed from the mould, the plastic foils removed and after evaporation of the surplus water a sandwich panel is obtained with a thickness of 124 mm, a density per surface area unit of 8.75 kg/m² and an incombustible skin. The stiffness and the bending strength are comparable to those of a similar element with skins of impact resistant polystyrene and remain unaltered after passing through 15 temperature cycles between -25 and +60 degrees Celsius, just as after complete saturation with water.

### Example 4.

1.23 kg of powdery anhydrous aluminosilicate Al₂O₃.2 SiO₂ is mixed with 1.23 kg of grog with particles smaller than 120 micrometres and 1.59 kg of potassium silicate suspended in water with a molar ratio SiO₂/K₂O = 1.70 and H₂O/K₂O = 10.1 in a planetary mixer until an homogeneous suspension is obtained. 1.53 kg of partly expanded polystyrene granules are added to the thus obtained matrix and it is mixed until the matrix forms a film which covers the granules.

The mixture is put into a rectangular mould of polytetrafluoroethylene with inside dimensions 0.3 m x 2 m x 50 mm but a polypropylene film with a surface density of 25 g/m² is placed above and below the mixture.

The mould is closed without applying external pressure but so that this mould does not open when the internal pressure increases through the further expansion of the polystyrene granules. The filled mould is placed in a tunnel microwave oven which is so designed that the field distribution is as uniform as possible. After 2 minutes operation of the oven the mould is removed and it is opened.

Through the effect of the microwave oven the partly expanded polystyrene granules are further distended and the matrix is polymerised. After evaporation of the surplus water a thermal insulating element is obtained with the same dimensions as the inside of the mould, a coefficient of thermal conductivity of 0.05 W/mK and a density of 165 kg/m³. Through the internal pressure of the expanding granules the polypropylene films are completely saturated with matrix material and they contribute to the mechanical strength, the ductility and the fire-resistance of the whole. This whole has a bending strength of 0.4 MPa, an elastic modulus in bending of 60 MPa, a stretch with breakage in bending of more than 3% and a fire-resistance FR30.

### Example 5.

The matrix material from example 4 after homogenisation is mixed with 6 g of aluminium powder and this mixture is poured into a stiff mould with a capacity of 10 litres.

The mould is closed after expansion of the mixture and it is placed in an oven preheated to 105 degrees Celsius.

After polymerisation of the mixture the mould is opened. This mixture has taken the form of the inside of the mould through the internal pressure which has been built up through the formation of gas after closing the mould. After evaporation of the surplus water a thermal insulating and completely incombustible element is obtained with a density of 350 kg/m³. It possesses a fine cellular structure and can be sawn. Screws can be screwed into it with great holding power.

The above described method is extremely simple and permits thermal insulating and to a large degree fire-resistant elements to be obtained in practically any form whatever and with excellent mechanical properties. The reaction between the aluminosilicate and the alkali metal hydroxide and/or silicate is an irreversible polymerisation whereby a so-called mineral polymer is formed.

The present invention is in no way restricted to the embodiments described above but a similar insulating element manufactured according to the method can be developed in different forms and dimensions without departing from the scope of the present invention.

In particular the element need not necessarily be plate shaped.

The expanded synthetic material need not necessarily be polystyrene, but must however form closed cells.

Instead of mixing sodium silicate or potassium silicate with the aluminosilicate other alkali metal silicates such as lithium silicate or even alkali metal hydroxides can be mixed.

## Claims

1. Method for manufacturing an insulating element, according to which a liquid or weak matrix on the basis of at least one silicate is allowed to harden and before the matrix is completely hardened gas bubbles are introduced into it or form in it, characterised in that the matrix on the basis of aluminosilicate mixed with at least one alkali metal hydroxide and/or alkali metal silicate is formed in aqueous medium and the matrix is allowed to harden through reaction of the aluminosilicate with the alkali metal hydroxide and/or the alkali metal silicate, whereby at least in the beginning of the reaction until a stiff mass is obtained, the dehydration is hindered and a pressure is exerted on the outside of the matrix, and before this stiff mass is obtained, the gas bubbles are introduced into the matrix and/or formed in situ.

2. Method according to the preceding claim, characterised in that removal by suction of the gas phase is not employed and the aforementioned reaction is allowed, at least until a stiff mass is obtained, to take place under an overpressure in relation to the atmospheric pressure.

3. Method according to the preceding claim, characterised in that the reaction is allowed, at least until a stiff mass is obtained, to take place with an overpressure on the outside of between 0.20 and 1.00 bar.

4. Method according to the preceding claim, characterised in that the reaction is allowed, at least until a stiff mass is obtained, to take place with an overpressure on the outside of between 0.20 and 0.30 bar.

5. Method according to any of the preceding claims, characterised in that the reaction is allowed, at least until a stiff mass is obtained, to take place in a mould in order to hinder dehydration.

6. Method according to any of the preceding claims, characterised in that the aluminosilicate is allowed to react with the alkali metal hydroxide and/or -silicate after shaping.

7. Method according to any of the preceding claims, characterised in that the element is provided with a skin on at least one side.

8. Method according to any of the claims 1 to 6, characterised in that the element is provided with a fire-resistant skin on at least one side.

9. Method according to the preceding claim, characterised in that a skin is provided of an analogue material as for the matrix but with less or no gas bubbles.

10. Method according to the preceding claim characterised in that a fibre coating or loose fibres are incorporated into the skin.

11. Method according to any of the preceding claims, characterised in that the element is formed in the form of a plate.

12. Method according to any of the claims 1 to 11, characterised in that the gas bubbles are introduced into the matrix by physical means.

13. Method according to any of the claims 1 to 11, characterised in that gas bubbles are introduced into the matrix by the addition of elastic expanded granules with closed cells which enclose gas.

14. Method according to either of the claims 12 and 13, characterised in that the pressure on the outside of the matrix is exerted at least for a part by means of a press.

15. Method according to any of the claims 1 to 11, characterised in that gas bubbles are introduced into the matrix by the addition of not yet completely expanded elastic granules with closed cells, which are allowed to expand in the matrix before the stiff mass is obtained.

16. Method according to the preceding claim, characterised in that the reaction is allowed to take place in an almost closed stiff mould and the pressure on the outside of the matrix is exerted at least for a part through the expansion of the granules.

17. Method according to either of the claims 13 and 14, characterised in that the granules are covered with a hydrophillic substance prior to being introduced into the matrix.

18. Method according to any of the claims 12 to 17, characterised in that polystyrene granules are used as elastic granules with closed cells.

19. Method according to any of the claims 1 and 11, characterised in that gas bubbles are formed in the matrix itself through the addition of a gas producing or foam forming substance.

20. Method according to the preceding claim, characterised in that the reaction is allowed, at least until a stiff mass is obtained, to take place in an almost closed stiff mould and the pressure on the outside of the matrix is at least for a part caused through the formation of gas or formation of foam in the mould itself.

21. Method according to any of the preceding claims, characterised in that additional substances are added to the matrix in order to alter the viscosity of the matrix before the hardening takes place.

22. Method according to the preceding claim, characterised in that mineral fibres are added to the matrix.

23. Method according to claim 21, characterised in that organic polymer fibres are added to the matrix.

24. Method according to any of the preceding claims, characterised in that the shaped matrix is allowed to harden at raised temperature until the stiff mass is obtained.

25. Method according to the preceding claim, characterised in that the hardening of the matrix is accelerated by heating up to a temperature of between 30 and 120 degrees Celsius.

26. Method for manufacturing an insulating element, characterised in that a skin of a liquid or weak matrix of aluminosilicate mixed with at least one alkali metal hydroxide and/or alkali metal silicate in aqueous medium is applied to at least a part of the surface of an element of insulating foam plastic and is allowed to react, whereby the dehydration is hindered at least until partial hardening.

27. Method according to the preceding claim, characterised in that an element of polystyrene is used as element of insulating foam plastic.

28. Insulating element manufactured with the method according to any of the preceding claims.
